# EUROPEAN PATENT APPLICATION

(11) **EP 4 654 410 A1**
(43) Date of publication of application: **26.11.2025**
(21) Application number: 25174727.5
(22) Date of filing: 07.05.2025
(51) Int. Cl.: H02J 1/04, F24F 11/46, F24F 11/88, H02J 1/06, H02J 13/00

(54) **SYSTEM AND METHOD FOR CONTROLLING POWER-MANAGED INDOOR AND OUTDOOR UNITS**

(30) Priority: 07.05.2024 US 202463643602 P
(71) Applicant: Vertiv Corporation, Westerville, OH 43082 (US)
(72) Inventor: Ratcliff, Gregory Wade, Westerville, Ohio 43082 (US); Wilson, Brad Lee, Westerville, Ohio 43082 (US)
(74) Representative: Cousens, Nico

(57) **Abstract**

A power-managed air conditioning system comprises several external load devices, a power management system, and a controller. The external load devices comprise an indoor unit with a compressor, an evaporator, and an expansion valve, and an outdoor unit with a condenser and a condenser fan. The power management system connects a power source to the external devices and includes a transmitter, a receiver, a power circuit, and a sensor. The transmitter receives a first current type from the power source and converts it into a pulsed current. The receiver receives the pulsed current from the transmitter, converts it into a second current type, and delivers the second current type to the external load devices. The power circuit is connected to the transmitter and the receiver and transmits the pulsed current from the transmitter to the receiver. The sensor is configured to sense the pulsed current in the power circuits.

## Description

### CROSS-REFERENCE TO RELATED APPLICATIONS

This application claims the benefit of priority to U.S. Provisional Application Ser. No. 63/643,602, entitled "SYSTEM AND METHOD FOR CONTROLLING POWER-MANAGED INDOOR AND OUTDOOR UNITS," filed May 7, 2024.

### TECHNICAL FIELD

The present disclosure relates to a power-managed system, and more specifically, to an integrated power-managed system having indoor and outdoor units.

### BACKGROUND

Buildings and facilities with large numbers of electronic devices consume significant amounts of electricity, which generates excess heat that must be managed to prevent device failure. Data centers, in particular, are major energy consumers. As a result, cooling systems such as heating, ventilation, and air conditioning (HVAC) or air conditioning (AC) systems are commonly used to cool spaces housing large quantities of electronic devices, including data centers.

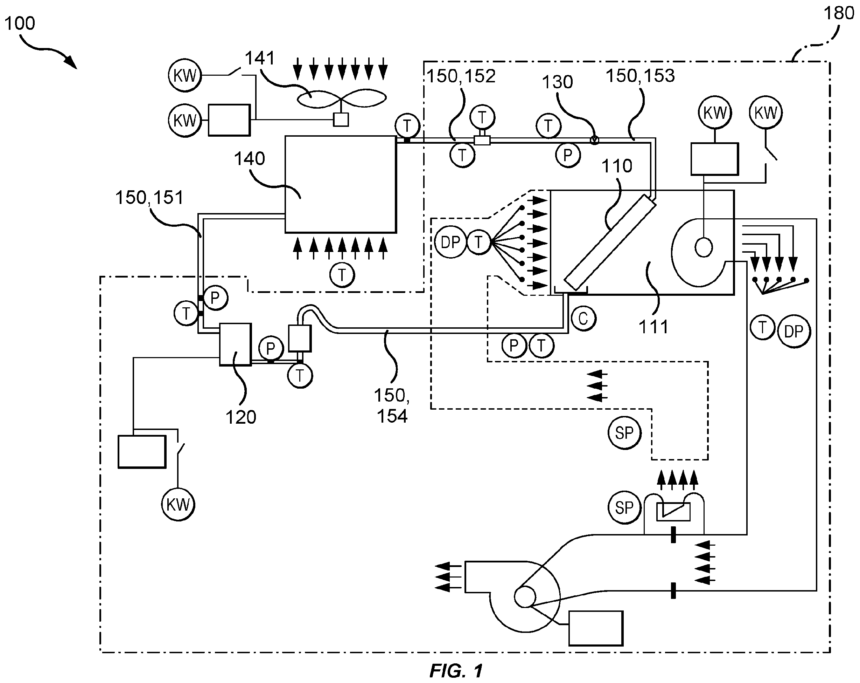

FIG. 1 illustrates a typical AC or HVAC system 100 used for cooling spaces. This system includes an evaporator 110, a compressor 120, an expansion valve 130, and a condenser 140. In many AC or HVAC systems, condensers are located outside, typically on rooftops of buildings (e.g., housing 180), while components like evaporators, compressors, and expansion valves are housed indoors. Outdoor condensers are usually equipped with condenser fans (e.g., condenser fan 141) to expel heat from the condenser fluid lines (e.g., condenser coils). These fans are powered by motors connected to an electrical circuit separate from the indoor components. Outdoor condenser systems, including the fan-coil assembly, require several kilowatts of energy, and their design often combines electrical and plumbing elements for simplicity. Condenser fans, typically 208V (or higher) AC motors, require separate electrical conduits and installation by licensed electricians. Coordinating these installations often involves multiple trades, such as electricians, plumbers, and HVAC professionals, which can complicate the setup and increase costs.

In the event of a fault in the condenser system, licensed electricians and plumbers must work outside to repair the outdoor unit (e.g., condenser), while also addressing any issues with the indoor unit (e.g., evaporators, compressors) as needed.

Accordingly, there is a need for an improved solution that reduces the complexity, labor, and costs associated with repairing outdoor units, such as in the case of a power failure in the condenser fan of an AC system.

### SUMMARY

Embodiments described herein relate to techniques for cooling data centers. In particular, systems and methods of the present disclosure provide new and novel.

The present disclosure addresses the need for a simplified, cost-effective solution for the installation and monitoring of outdoor units in HVAC and AC systems. Traditional outdoor units, particularly condensers, often require installation by skilled electrical tradespeople or journeymen, involving complex electrical and plumbing coordination. The installation process is costly and time-consuming, requiring specialized knowledge and labor. In contrast, the present disclosure provides a solution that allows the installation of the outdoor unit in a manner similar to Class II wiring systems, such as Ethernet cables, which do not require the use of skilled electrical professionals. This simplified installation process significantly reduces both upfront costs and the need for specialized labor. The system can be installed using low-voltage wiring and connectors, eliminating the need for licensed electricians and reducing installation time.

Moreover, the present disclosure facilitates more efficient monitoring of the outdoor unit. With the simplified installation and reduced reliance on specialized electrical trades, ongoing monitoring and maintenance can be performed more easily and at a lower cost. This innovation ensures that both the installation and operation of the outdoor unit are more accessible, cost-effective, and less dependent on complex skilled labor.

In accordance with an embodiment of the present disclosure, a power-managed air conditioning system comprises a plurality of external load devices, a power management system, and a controller. The external load devices are configured to receive a current. The external load devices comprise an indoor unit and an outdoor unit. The power management system is configured to selectively electrically connect a power source to at least one of the external devices. The power management system comprises a transmitter, a receiver, at least one power circuit, and a sensor. The transmitter is configured to receive a first current type from the power source and convert the first current type to a pulsed current. The receiver is configured to receive the pulsed current from the transmitter, convert the pulsed current to a second current type, and deliver the second current type to the external load devices. The power circuit is in electrical communication with the transmitter and the receiver and is configured to transmit the pulsed current from the transmitter to the receiver. The sensor is configured to sense the pulsed current in at least one of the power circuits. The controller is in electrical communication with at least a portion of the power management system and the external load devices.

In some embodiments, the controller of the power-managed air conditioning system is in electrical communication with the sensor of the power management system. The controller is configured to determine, based on an output of the sensor, whether the pulsed current of the power circuit is outside a threshold, upon determining the pulsed current is outside a threshold, generate a fault signal, and determine an amount of the pulsed current to be received by the receiver based on the presence of the fault signal.

In some embodiments, the controller of the powered-managed air conditioning system is in electrical communication with the condenser fan of one of the external devices. The controller is configured to adjust an operation of the condenser fan based on an output of the sensor.

In some embodiments, the controller of the powered-managed air conditioning system is configured to alter a status of an indicator based on the presence of the fault signal.

In some embodiments, the power management system of the powered-managed air conditioning system further comprises a switch configured to provide a series of pulse currents at a predefined rate to the receiver. The switch is configured to connect or disconnect the transmitter from the receiver, and the switch is in electrical communication with the controller.

In some embodiments, the controller of the powered-managed air conditioning system is configured to determine whether the switch connects the transmitter to the receiver, and upon the switch disconnecting the transmitter and the receiver, determine a condition of at least one of the power circuits based on an output from the sensor.

In some embodiments, the first current type from the power source is an AC power. The transmitter is configured to convert the first type of current to a DC current and then convert the DC current into the pulsed current.

In some embodiments, the first current type from the power source is an AC power, and wherein the transmitter is configured to convert the first type of current to a DC current and then convert the DC current into the pulsed current.

In some embodiments, the indoor unit comprises at least a compressor and an evaporator, and the outdoor unit comprises a condenser and at least one condenser fan.

In some embodiments, the indoor unit comprises at least an evaporator, and the outdoor unit comprises at least one of a pump or a heat exchanger fan.

In some embodiments, the power circuit of the powered-managed air conditioning system is a Class 4 circuit, and the power circuit is a pair of power circuits.

In some embodiments, each of the power circuits of the powered-managed air conditioning system use copper conductors ranging from 6AWG to 24AWG.

In some embodiments, the transmitter is located within the indoor unit, and the receiver is located within the outdoor unit.

In accordance with another embodiment of the present disclosure, a method of controlling a power-managed air conditioning system comprises providing a plurality of external load devices, a power management system, and a controller in electrical communication with at least a portion of the power management system and the external load devices. The external load devices comprise a compressor in a first location, an evaporator in the first location, an expansion valve in the first location, a condenser in a second location separate from the first location, and at least one condenser fan in the second location. The power management system comprises a transmitter, a receiver, at least one power circuit, and a sensor. The method of controlling a power-managed air conditioning system further comprises receiving a first current from a power source from the transmitter of the power management system. The method of controlling a power-managed air conditioning system further comprises converting the first current to a pulsed current through the transmitter of the power management system. The method of controlling a power-managed air conditioning system further comprises determining whether the pulsed current on at least one power circuit is within a threshold through the controller and an output of the sensor. Upon determining that the pulse current is within the threshold, the receiver converts the pulsed current to a second current. Upon determining that the pulse current is within the threshold, the receiver delivers the second current to at least one of the external load devices.

In some embodiments, the method of controlling a power-managed air conditioning system further comprises upon determining that the pulsed current is outside the threshold, transmitting, by the receiver, a percentage of the second current to one of the external load devices.

In some embodiments, the method of controlling a power-managed air conditioning system further comprises upon determining that the pulsed current is outside the threshold, disconnecting the receiver from the at least one power circuit for a predefined period of time.

In some embodiments, the method of controlling a power-managed air conditioning system further comprises, after the predefined period of time elapses, reconnecting the receiver to the at least one power circuit.

In some embodiments, the method of controlling a power-managed air conditioning system further comprises disconnecting the receiver from at least one power circuit and the transmitter and determining a condition of at least one of the power circuits based on the output from the sensor once the receiver is disconnected.

In some embodiments, the method of controlling a power-managed air conditioning system further comprises upon determining that the pulsed current is outside the threshold, changing a status of an indicator.

In some embodiments, the power circuits use copper conductors ranging from 6AWG to 24AWG.

In some embodiments, the power circuit is a Class 4 circuit.

Other aspects and advantages of the disclosure will become apparent from the following detailed description, taken in conjunction with the accompanying drawings, illustrating by way of example the principles of the disclosure.

### BRIEF DESCRIPTION OF THE DRAWINGS

The disclosure will be readily understood by the following detailed description in conjunction with the accompanying drawings, wherein like reference numerals designate like elements:
FIG. 1 shows a circuit of air conditioning evaporator and condenser according to the related art;
FIG. 2 shows an example of fault managed power system according to the related art;
FIG. 3 shows a power-managed air conditioning system according to an exemplary embodiment of the present disclosure;
FIG. 4 shows a diagram of a control unit of a power management system of FIG. 3;
FIG. 5 shows a diagram of the power management system; and
FIG. 6 shows a flowchart of a power management method for an air conditioning system according to an embodiment of the present disclosure.

### DETAILED DESCRIPTION

The figures described above and the written description of specific structures and functions below are not presented to limit the scope of what Applicant has invented or the scope of the appended claims. Rather, the figures and written description are provided to teach any person skilled in the art to make and use the disclosures for which patent protection is sought. Those skilled in the art will appreciate that not all features of a commercial embodiment of the disclosures are described or shown for the sake of clarity and understanding. Persons of skill in this art will also appreciate that the development of an actual commercial embodiment incorporating aspects of the present disclosures will require numerous implementation-specific decisions to achieve the developer's goal for the commercial embodiment. Such implementation-specific decisions may include and likely are not limited to, compliance with system-related, business-related, government-related, and other constraints, which may vary by specific implementation, location, and from time to time. While a developer's efforts might be complex and time-consuming in an absolute sense, such efforts would be, nevertheless, a routine undertaking for those of skill in this art having the benefit of this disclosure. It must be understood that the disclosures disclosed and taught herein are susceptible to numerous and various modifications and alternative forms.

The use of a singular term, such as, but not limited to, "a," is not intended as limiting of the number of items. The use of relational terms, such as, but not limited to, "top," "bottom," "left," "right," "upper," "lower," "down," "up," "side," and the like are used in the written description for clarity in specific reference to the Figures and are not intended to limit the scope of the disclosures or the appended claims. The terms "including" and "such as" are for illustrative purposes but not limited thereto. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume, and density, among others.

As described herein, aspects of the present disclosure provide systems and methods for managing and responding to faults (e.g., single-phase faults) in a power transmission system for both indoor and outdoor units, such as air conditioning (AC) systems. These systems analyze data (e.g., voltage, current, etc.) from the power transmission system to detect faults and respond adaptively and timely. In response to fault detection, the systems enable integrated control of both indoor units (e.g., compressor, evaporator) and outdoor units (e.g., condenser, fan-coil systems) via a single power management system located inside the building. This integrated control eliminates the need for separately inspecting and manually managing the indoor and outdoor units, thereby simplifying operation and reducing costs associated with fault management and maintenance.

One aspect of the present disclosure leverages Class 4 Power, also known as Fault Managed Power (FMP), for outdoor units. The FMP system enables the transmission of power up to several thousand watts over long distances (hundreds to thousands of feet) while ensuring fault energy is limited. FMP systems can monitor and control the power delivered to the outdoor units, minimizing the risk of damage or safety hazards by limiting fault energy. By utilizing Class 4 circuits, these systems offer a safer, more efficient alternative to traditional high-power transmission systems, while eliminating the need for skilled electrical tradespeople for installation and maintenance.

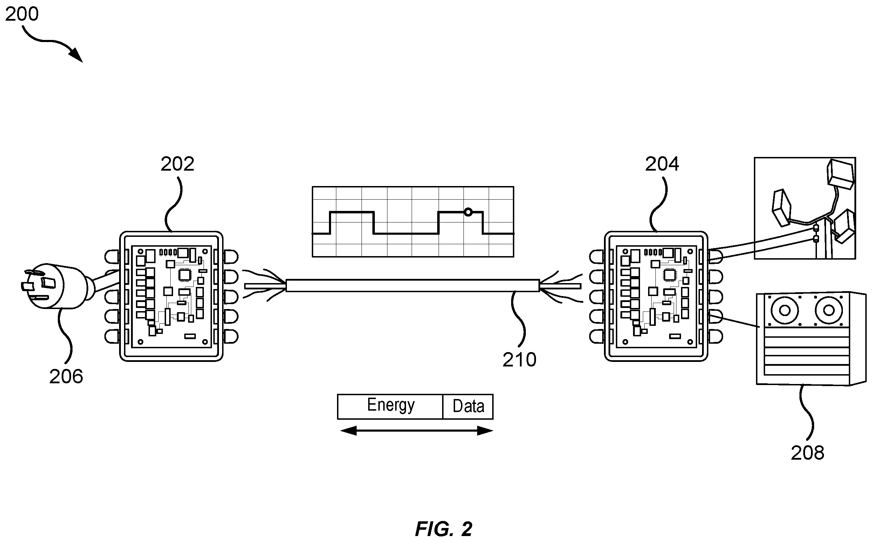

FIG. 2 illustrates an example of the FMP system 200, which includes a transmitter 202 and a receiver 204 as main components. The transmitter 202 draws power from a power source 206 and creates a Class 4 power circuit 210. Power is then delivered along the Class 4 circuit 210 to the receiver 204, which converts it to a form suitable for the external load device 208. The receiver 204 may be a standalone device that powers the external device, or it may be integrated into the device itself. The FMP system 200 continuously monitors the circuit for faults. If a person comes into contact with the wires, the FMP system limits the amount of energy that can flow through, preventing injury and ensuring safety. The system can shut off power in milliseconds, ensuring a quick response to limit the impact of the fault.

FMP systems not only limit fault energy for line-to-earth contacts but also for line-to-line faults. In contrast to traditional systems that rely on ground fault circuit interrupters (GFCIs), which cannot distinguish between a person and a load in the event of a fault, FMP systems can identify and respond to faults more effectively. By distinguishing between a person in contact with the lines and the load, FMP systems ensure safety in a wider range of fault scenarios.

The present disclosure introduces a one-to-one system relationship between the internal unit and its associated outdoor fan, utilizing FMP for heat rejection. The close coupling of power between the condenser and evaporator systems allows for simpler, more integrated designs. Key benefits of this system include: 1) safer operation via a one-to-one power circuit; 2) integrated power management for energy tracking and efficiency monitoring; 3) scalability without requiring additional electricians or electrical connections; and 4) parallel designs where power, signaling, and plumbing are directly linked from the indoor units to the outdoor fan-coil systems, reducing complexity.

Aspects of the present disclosure are applicable industry-wide, especially in mini-split systems commonly used in residential spaces, such as houses, condos, or apartments, as well as smaller network closets. With the growing adoption of Power over Ethernet (PoE) systems, which power devices like phones, security cameras, and routers over Ethernet cables, the use of low-voltage, Class 2 wiring has become more common. These PoE systems offer safety benefits and eliminate the need for skilled electricians and extensive conduit systems in commercial settings. However, traditional systems do not reflect the interdependency between devices and still require separate management for power and electrical defects. The FMP system described herein reduces the time and labor required to manage power transmission to each device by integrating power control, thus simplifying installation and maintenance processes.

The present disclosure also facilitates the deployment of larger-scale cooling systems by simplifying the pathways and penetrations to rooftops. The use of Class 4 circuits reduces the risk of fire by limiting energy flow during arc faults or resistive faults, further enhancing safety and reducing installation costs.

The proposed embodiments offer a novel electrical architecture for cooling systems in which outdoor fan-coil units are closely coupled and powered directly by the indoor systems, without the need for external power sources. By utilizing Class 4, Fault Managed Power (FMP) integrated into the indoor system, traditional components such as external power sources, electrical conduits, breakers, fuses, and conventional wiring are eliminated, reducing both material costs and installation complexity.

A more complete understanding of the system and method of managing faults in a power system will be afforded to those skilled in the art, along with a realization of additional advantages and objects thereof, upon consideration of the following detailed description of the exemplary embodiments.

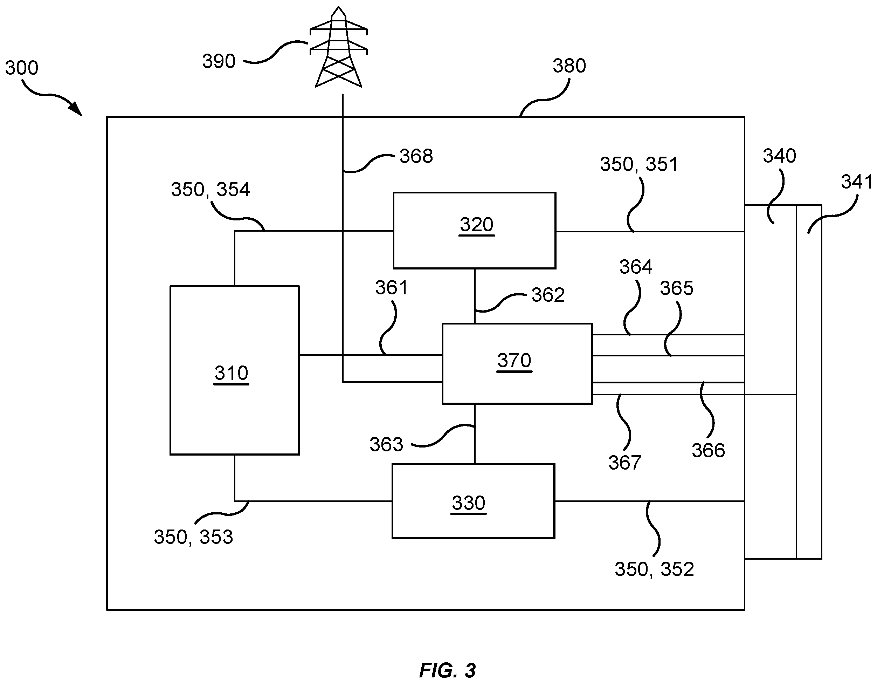

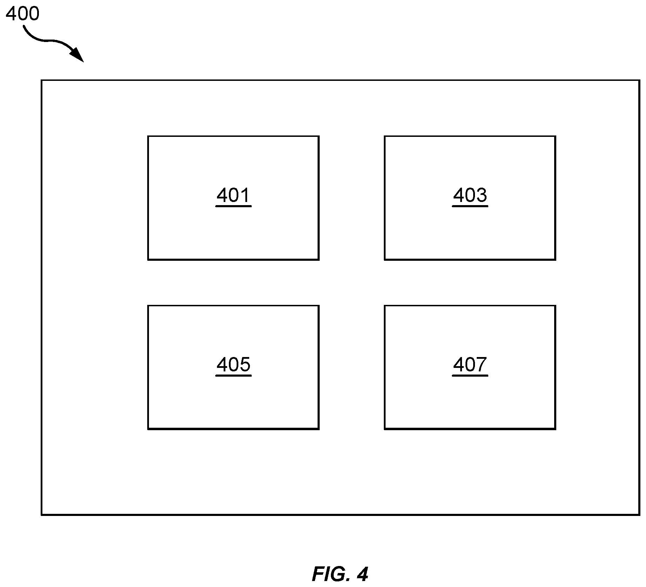

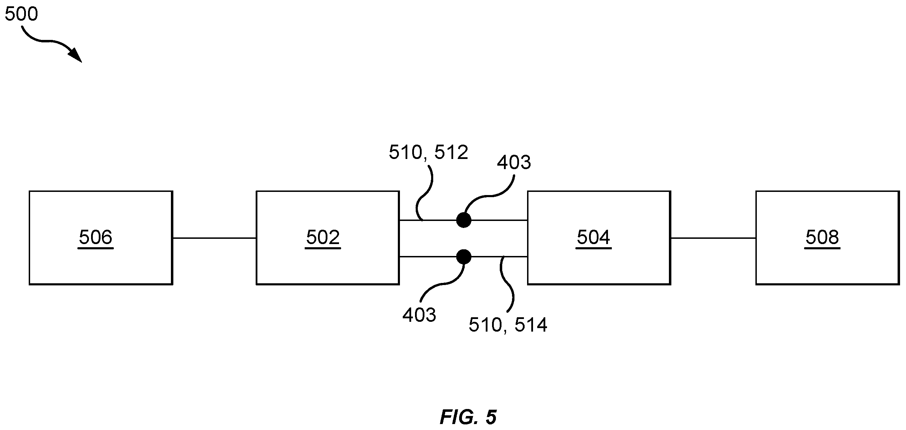

FIG. 3 illustrates an integrally power-managed air conditioning system 300 according to an embodiment of the present disclosure. FIG. 4 presents a diagram of a control unit for the power management system, and FIG. 5 shows a diagram of the overall power management system.

The power-managed air conditioning system 300 for cooling spaces includes an evaporator 310, a compressor 320, an expansion valve 330, and a condenser 340, similar to the general air conditioning (AC) system 100 depicted in FIG. 1. The evaporator 310, compressor 320, and expansion valve 330 are, in general, located inside a housing or building 380, functioning as the indoor unit, while the condenser 340 is positioned outside the building 380 as the outdoor unit. In certain embodiments, the condenser 340 may be placed on a rooftop, side wall, or other suitable external locations of the building, and may include a condenser fan 341 as part of the condenser system. The condenser 340 works to cool the refrigerant from the indoor unit, while the fan 341 helps expel heat by blowing air through the condenser coils, facilitating the conversion of hot refrigerant gas into a cool liquid. As the fan 341 operates, the indoor unit can continue to circulate cool air within the building. In an alternate embodiment, an evaporator is located within a server rack inside a housing or building, functioning as the indoor unit. Furthermore, in the alternate embodiment, a refrigerant pump, a heat exchanger, and a plurality of heat exchanger fans are located outside the building as the outdoor unit.

The power-managed air conditioning system 300 further includes a fluid circuit 350 that interconnects the components-evaporator 310, compressor 320, expansion valve 330, and condenser 340-to allow fluid communication between them, as shown in FIG. 3. For example, the hot refrigerant compressed by the compressor 320 is directed to the condenser 340 via a first fluid circuit 351, where it passes through the condenser coils and is cooled by the action of the fan 341. The refrigerant exits the condenser 340 via a second fluid circuit 352, now cooler but still under pressure from the compressor. The refrigerant then reaches the expansion valve 330, which regulates the flow of refrigerant into the evaporator 310 through a third fluid circuit 353. The cycle completes as the cool refrigerant is returned to the compressor 320 through a fourth fluid circuit 354. In some embodiments, any suitable refrigerant may be used, such as R22, R410A, R407C, R744, R134a, R1234yf, R290, R600a, R718, R454B, or other fluids like water or glycol.

In some embodiments, the power-managed air conditioning system 300 includes a control panel 370 connected to a power source 390 (e.g., AC power) for supplying power to the system. Electrical circuits are connected between the control panel 370 and the indoor and outdoor units to facilitate power transmission, alongside the flow of refrigerant through the fluid circuits.

Additionally, the power-managed air conditioning system 300 may incorporate a communication line, which may be wired or wireless, connecting the control panel 370 to the indoor and outdoor units. This communication line enables the control panel to receive data regarding the operational states of the various components of the system.

Referring to FIG. 4, which shows a control panel 400 corresponding to control panel 370 from FIG. 3, the control panel 400 may include a controller 401, a sensor 403, a switch 405, and an indicator 407. The control panel 370 may have similar components. In some embodiments, the control panel 400 may also include a display, such as a touch screen, capable of presenting various indicia. The sensor 403 may be one or more sensors configured to monitor parameters like current, power, temperature, speed, etc. Examples of suitable sensors include current transformers, capacitive coupling voltage transformers, voltage sensors, temperature sensors, and others. The sensor(s) 403 may be positioned to monitor the evaporator 310, compressor 320, expansion valve 330, condenser 340, and condenser fan 341 to detect the operational state of these devices, including parameters such as temperature, voltage levels, and current levels.

In some embodiments, the switch 405 may include one or more switches that can be independently controlled to connect or disconnect power from the power source 390. Based on inputs from the sensor 403, the controller 401 may control the switch 405 to disconnect the power from the power source 390 or to disconnect power supply to one or more components of the indoor or outdoor units in the power-managed air conditioning system 300. For example, the controller 401 may control the switch 405 to disconnect or reconnect power to circuits 361, 362, 363, 364, 365, 366, and 367, or the power receiving circuit 368. Additionally, the controller 401 may monitor the circuit for faults and automatically restore power if the fault is cleared.

In some embodiments, the control panel 400 may include one or more indicators, such as light-emitting diodes (LEDs) 407, to indicate system conditions such as low voltage, high voltage, or faults in the system or components. Alternatively, the indicators 407 may include audio outputs, such as speakers or haptic feedback devices.

FIG. 5 illustrates a power management system 500 integrated with or coupled to control panel 400 (or control panel 370). The power management system 500 includes a transmitter 502 and a receiver 504 that communicate with each other. The transmitter 502 receives power from a power source 506 (or power source 390) and transmits power over one or more Class 4 circuits 510 to the receiver 504. In some embodiments, the transmitter 502 may include a power converter to convert incoming power (e.g., AC power) from the power source 506 into a different form, such as DC power, which is then limited to a high-voltage, low-current DC output. The transmitter 502 may further convert the DC power into a pulsed current waveform, where each pulse has a short duration (e.g., 3 ms). In some embodiments, the transmitter 502 may be located adjacent to the indoor unit, and the receiver 504 may be located adjacent to the outdoor unit. The power management system 500 can instantly detect faults (e.g., a short circuit or a person coming into contact with wires) by analyzing the current waveform through the controller 401 and sensor 403. If a fault is detected, power transmission can be halted or limited within milliseconds.

In some embodiments, the power management system 500 may adjust an operation of the fan 341 based on sensed current or fault conditions, such that the fan 341 operates at a reduced speed or is temporarily disabled when the current is outside the threshold, in order to prevent damage to the system.

The Class 4 circuit 510 may be constructed to meet UL 1400-2 standards and may use copper conductors, such as 6AWG to 24AWG wires. The copper conductors may be in pair.

In some embodiments, the transmitter 502 is designed to expect that the receiver 504 will periodically disconnect from the current loop. This disconnection allows the transmitter 502 to measure the conditions of the current loop while the receiver 504 is not drawing current. Upon initiating power transmission over the circuit 510, the transmitter 502 increases the current until it reaches the desired level. Once the receiver 504 has received sufficient current, its current draw stabilizes. The receiver 504 may periodically disconnect from the current loop to enable a safety check to be performed.

When no fault is detected, the current waveform is received by the receiver 504 in the form of Class 4 power. The receiver 504 then converts this power into the appropriate form required by external load devices 508, such as the evaporator 310, compressor 320, expansion valve 330, condenser 340, and condenser fan 341. For example, the receiver 504 may convert the pulse current into +/- 48 VDC to power these devices.

The power management system 500, through its integration with the sensor 403 and controller 401, is capable of detecting faults in the power transmission system. The sensor 403 may be connected to the Class 4 power circuits 510 or other power circuits, such as the first power circuit 512 or the second power circuit 514, to monitor the current passing through the circuit. The controller 401 analyzes the sensor data to determine whether the current is within an acceptable threshold. If the current exceeds this threshold, the controller 401 generates a control signal, such as activating an alarm, lighting an LED indicator, or displaying information on a screen. Power transmission may be automatically disconnected by the controller 401, or it may be manually controlled using the switch 405.

In some embodiments, the receiver 504 may periodically disconnect from the current loop to perform safety checks via the sensor 403 and controller 401. The controller 401 determines whether a fault has occurred by analyzing the waveform, and if a fault is detected, it can control the switch 405 to disconnect the power or pulse currents. The controller 401 may also identify whether the fault is transient or permanent, or whether it involves a single-phase, double-phase, or triple-phase fault.

The controller 401 may be a general-purpose computing device, such as a personal computer, server, or handheld device, capable of executing user-installed program code. However, it is understood that the controller 401 represents a variety of computing devices that could perform the functions of the disclosure. In other embodiments, the controller 401 may be a specific-purpose computing device designed to perform the processes described here. The controller 401 may be part of a distributed control system, integrated within the power management system 500, control panel 400, or even within the transmitter 502 and receiver 504 components.

In some embodiments, the controller 401 may receive operational data from the indoor unit and the outdoor unit via the fluid circuit 341 and adjust the power delivery to the outdoor unit based on the operational data, such that the power supply to the outdoor unit is optimized based on the detected fluid flow rate or temperature conditions.

Additionally, the control panel 400 may include circuit breakers, intelligent electronic devices, electromagnetic filters, or any other transmission or computational devices known in the art.

In accordance with various aspects of the disclosure, when a fault is detected in the power-managed air conditioning system 300, both the fluid (e.g., refrigerant) and power supply can be monitored and managed simultaneously, either automatically or manually, within the building. Specifically, if a fault is detected in the condenser fan 341, which operates solely on electrical power, the power supply within the building can be adjusted while simultaneously inspecting the indoor units (e.g., fluid circuits) for further issues.

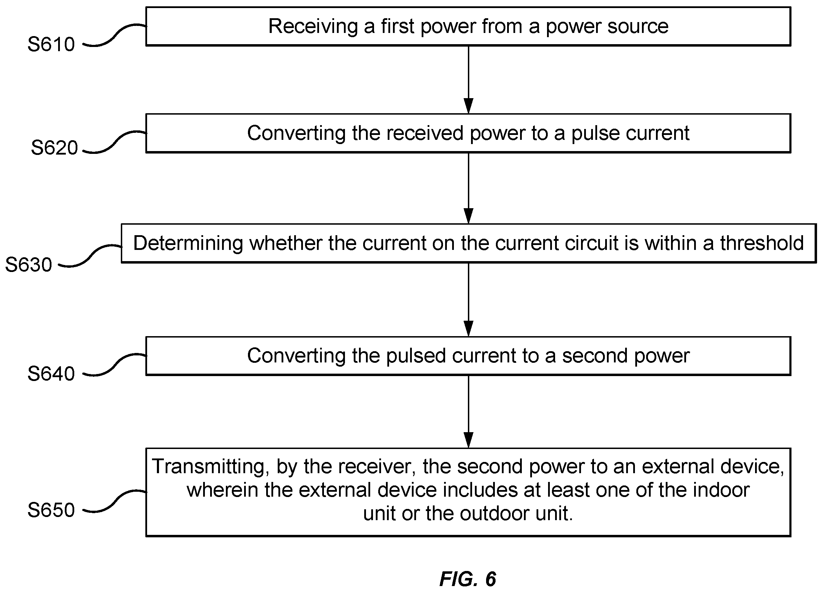

Referring to FIG. 6, an illustrative method flow diagram 600 for controlling the power-managed air conditioning system is shown according to embodiments of the present disclosure. The method 600 begins with step S610, where the transmitter 502 receives a first power or current from a power source (e.g., power source 390 or 506). In step S620, the received power or current is converted into a pulse current waveform, which is then transmitted to the receiver 504.

In step S630, the method evaluates whether the transmitted current falls within an acceptable threshold to determine the presence of any faults in the power transmission or electrical/power circuits. If no fault is detected, the method proceeds to step S640, where the pulse current is converted into a second power or current suitable for use by external devices. In step S650, the converted power is transmitted to the external device.

Alternatively, if a fault is detected due to the current falling outside the threshold, the method may proceed to a step (not pictured), where the power transmission is controlled by operating the switch(es) 405 to disconnect the power or modulate the power transmission for a predefined period, effectively mitigating the fault.

Additionally, the method may include periodically disconnecting the pulse current transmission to the receiver 504 prior to determining whether the transmitted current is within the threshold. This allows for safety checks to be performed on the circuit. Alternatively, the method may include sensing various operational states of the indoor and outdoor units, such as the speed of the condenser fan 341, the temperatures of both the indoor and outdoor units, and the flow of refrigerant through the fluid circuits, through the use of various sensors.

As described in the embodiments herein, the method enables the detection and control of power supply from a single location. For example, in systems with both an outdoor unit and an indoor unit, such as an air conditioning system, one integrated power management system located inside the building can be used to provide power to all electronic components. Traditionally, medium and large outdoor fan coil systems require a separate power source to drive cooling fans. The power management system described in this disclosure, however, can supply power to the outdoor fan coil system via a Fault Managed Power (FMP) circuit, such as the Class 4 power circuit 510, sourced from the indoor units, thereby eliminating the need for an independent outdoor electrical system.

The integration of the power management system offers several advantages. Among these, one notable benefit is the simplified installation process, as it requires only a single electrical circuit to the indoor unit and Class II wiring methods to the outdoor unit. For example, a technician checking the refrigeration lines inside the building can simultaneously inspect the power supply to the outdoor unit.

The fault detection and analysis system described in the present disclosure is not limited to any specific power generation or transmission system and can be applied to other systems that may benefit from fault detection and response capabilities. Additionally, the system may be adapted for use in various other applications and configurations not explicitly detailed herein.

As discussed herein, various systems and components are described as "obtaining" and/or "transferring" data (e.g., operational data, system specifications, etc.). It is understood that the corresponding data can be obtained using any solution. For example, the corresponding system/component can generate and/or be used to generate the data, retrieve the data from one or more data stores or sensors (e.g., a database), receive the data from another system/component, and/or the like. When the data is not generated by the particular system/component, it is understood that another system/component can be implemented apart from the system/component shown, which generates the data and provides it to the system/component and/or stores the data for access by the system/component.

Process flowcharts discussed herein illustrate the operation of possible implementations of systems, methods, and computer program products according to various embodiments of the present disclosure. In this regard, each block in the flowchart may represent a module, segment, or portion of code, which comprises one or more executable instructions for implementing the specified logical function(s). It should also be noted that, in some alternative implementations, the functions noted in the blocks might occur out of the order depicted in the figures. For example, blocks shown in succession may be executed substantially concurrently. It will also be noted that each block of flowchart illustration can be implemented by special-purpose hardware-based systems that perform the specified functions or acts, or combinations of special purpose hardware and computer instructions.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not intended to be exhaustive or to limit the embodiments to the precise forms disclosed. It will be apparent to one of ordinary skill in the art that many modifications and variations are possible in view of the above teachings.

## Claims

1. A power-managed air conditioning system comprising:
a plurality of external load devices configured to receive a current, wherein the external load devices comprise:
an indoor unit in a first location; and
an outdoor unit in a second location separate from the first location;
a power management system configured to selectively electrically connect a power source to at least one of the external load devices, wherein the power management system comprises:
a transmitter configured to receive a first current type from the power source and convert the first current type to a pulsed current;
a receiver configured to receive the pulsed current from the transmitter, the receiver further configured to convert the pulsed current to a second current type and deliver the second current type to the at least one of the external load devices;
at least one power circuit in electrical communication with the transmitter and the receiver, the at least one power circuit configured to transmit the pulsed current from the transmitter to the receiver; and
a sensor configured to sense the pulsed current in at least one of the power circuits; and
a controller in electrical communication with at least a portion of the power management system and the external load devices.

2. The power-managed air conditioning system of claim 1, wherein the controller is in electrical communication with the sensor of the power management system, the controller configured to:
determine, based on an output of the sensor, whether the pulsed current of the power circuit is outside a threshold,
upon determining the pulsed current is outside a threshold, generate a fault signal, and
determine an amount of the pulsed current to be received by the receiver based on the presence of the fault signal.

3. The power-managed air conditioning system of claim 1 or 2, wherein the controller is in electrical communication with the condenser fan of one of the external devices and wherein the controller is configured to adjust an operation of the condenser fan based on an output of the sensor.

4. The power-managed air conditioning system of claim 2 or 3 when dependent on claim 2, wherein the controller is configured to alter a status of an indicator based on the presence of the fault signal.

5. The power-managed air conditioning system of any preceding claim, wherein the power management system further comprises a switch configured to provide a series of pulse currents at a predefined rate to the receiver, the switch is further configured to connect or disconnect the transmitter from the receiver, and the switch is in electrical communication with the controller, and
optionally wherein the controller is configured to:
determine whether the switch connects the transmitter to the receiver, and
upon the switch disconnecting the transmitter and the receiver, determine a condition of at least one of the power circuits based on an output from the sensor.

6. The power-managed air conditioning system of any preceding claim, wherein the first current type from the power source is an AC power, and wherein the transmitter is configured to convert the first type of current to a DC current and then convert the DC current into the pulsed current.

7. The power-managed air conditioning system of any preceding claim, wherein the indoor unit comprises at least an evaporator and a compressor, and wherein the outdoor unit comprises a condenser and at least one condenser fan.

8. The power-managed air conditioning system of any preceding claim, wherein the indoor unit comprises at least an evaporator, and wherein the outdoor unit comprises at least one of a pump or a heat exchanger fan.

9. The power-managed air conditioning system of any preceding claim, wherein the transmitter is located within the indoor unit, and the receiver is located within the outdoor unit.

10. A method of controlling a power-managed air conditioning system, the method comprising:
providing a plurality of external load devices configured to receive a current, wherein the external load devices comprise a compressor in a first location, an evaporator in the first location, an expansion valve in the first location, a condenser in a second location separate from the first location, and at least one condenser fan in the second location;
providing a power management system, wherein the power management system comprises a transmitter, a receiver, at least one power circuit, and a sensor;
providing a controller in electrical communication of at least a portion of the power management system and the external load devices;
receiving, by the transmitter of the power management system, a first current from a power source;
converting, by the transmitter of the power management system, the first current to a pulsed current;
determining, by the controller and an output of the sensor, whether the pulsed current on the at least one power circuit is within a threshold;
upon determining that the pulse current is within the threshold converting, by the receiver of the power management system, the pulsed current to a second current; and
upon determining that the pulse current is within the threshold, delivering, by the receiver, the second current to at least one of the external load devices.

11. The method of claim 10, further comprising, upon determining that the pulsed current is outside the threshold, transmitting, by the receiver, a percentage of the second current to one of the external load devices.

12. The method of claim 10 or 11, further comprising, upon determining that the pulsed current is outside the threshold, disconnecting the receiver from the at least one power circuit for a predefined period of time, and
optionally further comprising, after the predefined period of time elapses, reconnecting the receiver to the at least one power circuit.

13. The method of any of any of claims 10 to 12, further comprising
disconnecting the receiver from the at least one power circuit and the transmitter, and
determining a condition of at least one of the power circuits based on the output from the sensor once the receiver is disconnected,
and/or further comprising, upon determining that the pulsed current is outside the threshold, changing a status of an indicator.

14. The power-managed air conditioning system or method of any preceding claim, wherein each of the power circuits uses copper conductors ranging from 6AWG to 24AWG.

15. The power-managed air conditioning system or method of any preceding claim, wherein the at least one power circuit is a Class 4 circuit and/or wherein the at least one power circuit is a pair of power circuits.
